(19) Europäisches Patentamt European Patent Office Office européen des brevets

(11) **EP 4 592 976 A1**

(12) **EUROPEAN PATENT APPLICATION**
published in accordance with Art. 153(4) EPC

(43) Date of publication:
30.07.2025 Bulletin 2025/31

(21) Application number: 23919505.0

(22) Date of filing: 14.12.2023

(51) International Patent Classification (IPC):
*G06V 30/422* (2022.01)    *G06V 30/413* (2022.01)
*G06V 30/414* (2022.01)

(52) Cooperative Patent Classification (CPC):
G06N 3/0464; G06N 3/08; G06V 10/82;
G06V 30/413; G06V 30/414; G06V 30/422

(86) International application number:
PCT/CN2023/138955

(87) International publication number:
WO 2024/159943 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.09.2023 CN 202311216105

(71) Applicants:
• China Nuclear Power Engineering Co., Ltd.
Shenzhen, Guangdong 518124 (CN)
• China Nuclear Power Design Company Ltd.
(Shenzhen)
Shenzhen, Guangdong 518100 (CN)

(72) Inventors:
• WANG, Peng
Shenzhen, Guangdong 518124 (CN)
• LEI, Weijian
Shenzhen, Guangdong 518124 (CN)

• WANG, Yunfu
Shenzhen, Guangdong 518124 (CN)
• LUO, Yalin
Shenzhen, Guangdong 518124 (CN)
• PENG, Jin
Shenzhen, Guangdong 518124 (CN)
• WANG, Li
Shenzhen, Guangdong 518124 (CN)
• LIN, Jiazhen
Shenzhen, Guangdong 518124 (CN)
• DU, Liqiong
Shenzhen, Guangdong 518124 (CN)
• MU, Senhui
Shenzhen, Guangdong 518124 (CN)
• WU, Xiangyong
Shenzhen, Guangdong 518124 (CN)

(74) Representative: Westphal, Mussgnug & Partner,
Patentanwälte mbB
Werinherstraße 79
81541 München (DE)

(54) **DRAWING TABLE AREA DETECTION METHOD AND APPARATUS, AND STORAGE MEDIUM AND ELECTRONIC DEVICE**

(57) The present invention relates to a drawing table area detection method and apparatus. The method comprises the following steps: acquiring an original image of a drawing to be detection; preprocessing the original image of the drawing, so as to obtain a binary image of the drawing: selecting an initial point from the binary image of the drawing: on the basis of the initial point, performing inside border detection on the binary image of the drawing by a point-by-point path finding method, so as to obtain an inner border of the drawing, performing table area detection on the basis of the inner border of the drawing, so as to obtain all table areas in the drawing: and performing table extraction on all the table areas in the drawing, so as to obtain all tables in the drawing. By means of the present invention, pixel-level processing is performed on an image, such that a large amount of data labeling work is avoided in a deep learning-based method; model training is performed without consuming a large number of resources, and support from an AI team is not required, such that the cost is low, in addition, the present invention is not interfered with by the content of a drawing, thereby achieving high precision.

EP 4 592 976 A1

| | |
|---|---|
| acquiring an original image of a drawing to be detection. | ~S101 |

| | |
|---|---|
| preprocessing the original image of the drawing to be detection to obtain a binary image of the drawing to be detection. | ~S102 |

| | |
|---|---|
| selecting an initial point in the binary image of the drawing to be detection. | ~S103 |

| | |
|---|---|
| performing inner border detection on the binary image of the drawing to be detection by a point-by-point path finding method based on the initial point to obtain an inner border of the drawing. | ~S104 |

| | |
|---|---|
| performing table area detection based on the inner border of the drawing to obtain all table areas in the drawing to be detection. | ~S105 |

| | |
|---|---|
| performing table extraction on all table areas in the drawing to be detection to obtain all tables in the drawing to be detection. | ~S106 |

FIG.1

**Description**

TECHNICAL FIELD

The present invention relates to the technical field of drawing table detection, and more particularly to a drawing table area detection method and apparatus, and a storage medium and an electronic device.

DESCRIPTION OF RELATED ART

Standardized nuclear power drawing documents generally contain two kinds of information: drawing content information (various components, component diagrams) and drawing document description information. The contents of drawings are generally distributed in the center of the drawings, and the description information of drawing documents is generally presented in the form of tables, including parts list, spare parts list, drawing document information, etc., which are attached to the inner border of the drawings. When formally checking documents, it is necessary to manually check the table file information in the drawings. In some large projects, the number of drawings is very huge, and it usually takes a huge labor cost to identify the table information in the drawings manually, and it is easy to make mistakes and omissions. Drawing table recognition is divided into three sub-tasks: table area detection, table structure recognition and table content recognition. The first step is to locate and extract the table, which is the basis of table structure recognition and table content recognition. Therefore, the efficiency and accuracy of location and extraction directly affect the subsequent structured extraction results.

At present, there are generally two schemes for the detection of drawing forms. A first scheme: For the tables in nuclear power drawings, the convolutional neural network model is used to conduct a lot of training to obtain a model that can automatically locate and extract the tables, and then use the obtained model for generalized recognition of drawing tables. A second scheme: fine-tune the model of domain specific tables based on existing table document recognition models, and then use the fine-tuned model to generalize the drawing table recognition.

In the first scheme, as long as the training is reasonable, the table in any scene can be located and recognized theoretically, but the process of the recognition method is complicated and unexplainable, and the resource consumption is large. In addition, its deployment and operation also require the support of a professional AI team, which is very costly. In the second scheme: although the technology based on model fine-tuning can be trained under limited resources, the existing table document recognition models are all models trained based on ordinary document tables. The trained tables are very regular and are completely inconsistent with the state of the tables arranged with different cell sizes of the drawings, and the drawing tables are very easily disturbed by the drawing contents, making it difficult to fine-tune.

BRIEF SUMMARY OF THE INVENTION

A technical problem to be solved by the present invention is to provide a drawing table area detection method and apparatus, and a storage medium, and an electronic device.

The technical scheme adopted by the invention to solve the technical problem is that a drawing table area detection method is constructed, which comprises the following steps:

acquiring an original image of a drawing to be detection;
preprocessing the original image of the drawing to be detection to obtain a binary image of the drawing to be detection;
selecting an initial point in the binary image of the drawing to be detection;
performing inner border detection on the binary image of the drawing to be detection by a point-by-point path finding method based on the initial point to obtain an inner border of the drawing;
performing table area detection based on the inner border of the drawing to obtain all table areas in the drawing to be detection;
performing table extraction on all table areas in the drawing to be detection to obtain all tables in the drawing to be detection.

In the drawing table area detection method according to the present invention, the step of preprocessing the original image of the drawing to be detection to obtain a binary image of the drawing to be detection comprises:

Performing gamma transformation on the original image of the drawing to be detection to obtain an enhanced image;
Performing gray-scale processing on the enhanced image to obtain a gray-scale image of the drawing to be detection;
Performing binary processing on the gray-scale image of the drawing to be detection, and performing inversion processing on the image after binary processing to obtain a binary image of the drawing to be detection.

In the drawing table area detection method according to the present invention, the step of selecting an initial point in the binary image of the drawing to be detection comprises:

Step a1. Selecting a point randomly as an anchor point in the binary image of the drawing to be detection;
Step a2. Obtaining a scene convolution operator of the anchor point;
Step a3: Detecting whether all element values in the scene convolution operator of the anchor point are a preset value;
Step a4. If it is, selecting the anchor point as the initial point;
Step a5. If not, moving one pixel distance to the left, and repeating the steps a1 to a4 to re-select an initial point.

In the drawing table area detection method according to the present invention, the step of performing inner border detection on the binary image of the drawing to be detection by a point-by-point path finding method based on the initial point to obtain an inner border of the drawing comprises:

Step b1. Setting a moving step by taking the initial point as a starting point;
Step b2. After setting the moving step, judging whether a next location will encounter an obstacle adopting an obstacle judgment algorithm, and if there is no obstacle, moving with the moving step; If there is an obstacle, executing the following step b3;
Step b3. Performing category calculation by adopting an obstacle category determination algorithm to obtain an obstacle category; The obstacle category comprises: a flat obstacle, a concave obstacle, or a convex obstacle;
Step b4. According to the obstacle category obtained by calculation, updating the direction convolution operator of the previous location by using a path-finding direction calculation algorithm to obtain an updated direction convolution operator of the previous location;
Step b5. Adopting the updated direction convolution operator of the previous location, calculating coordinate information of a next location according to the moved point coordinate calculation algorithm, and moving to the next location;
Step b6. Repeating steps b2 to b5 to perform path finding until the path finding is stopped when the path finding meets the path passed by the path finding process, and obtain the inner border of the drawing.

In the drawing table area detection method according to the present invention, in the step b2, judging whether the next location will encounter an obstacle adopting an obstacle judgment algorithm comprises:

Performing matrix dot product on the direction convolution operator and the scene convolution operator of the previous location to obtain a result matrix;
Judging whether the result matrix is a 0 matrix;
If the result matrix is a 0 matrix, it is determined that there is an obstacle at the next location;
If the result matrix is not a 0 matrix, it is determined that there is no obstacle at the next location.

In the drawing table area detection method according to the present invention, in the step b3, performing category calculation by adopting an obstacle category determination algorithm comprises:

If the result matrix is a 0 matrix, obtaining the number of 0 elements in the 0 matrix;
If the number of 0 elements in the 0 matrix is a first value, it is a flat obstacle;
If the number of 0 elements in the 0 matrix is a second value, it is a concave obstacle;
If the number of 0 elements in the 0 matrix is a third value, it is a convex obstacle.

In the drawing table area detection method according to the present invention, in the step b4, according to the obstacle category obtained by calculation, updating the direction convolution operator of the previous location by using a path-finding direction calculation algorithm to obtain an updated direction convolution operator of the previous location comprises:

If the calculated obstacle category is a flat angle or a concave angle, rotating the direction convolution operator of the previous location clockwise by a preset angle to obtain the updated direction convolution operator of the previous location;
If the calculated obstacle category is a convex angle, rotating the direction convolution operator of the previous location counterclockwise by a preset angle to obtain the updated direction convolution operator of the previous location.

In the drawing table area detection method according to the present invention, in step b5, adopting the updated direction convolution operator of the previous location, calculating coordinate information of a next location according to the moved point coordinate calculation algorithm, and moving to the next location, comprises:

Performing matrix dot product on the coordinate convolution operator of the initial point and the updated direction convolution operator of the previous location to obtain a dot product result matrix;
Extracting non-zero elements in the dot product result matrix;
Searching in the coordinate convolution operator of the previous location by using the subscript of the non-zero element in the dot product result matrix as an index to obtain the corresponding element in the coordinate convolution operator of the previous location;
Reconstructing the coordinate convolution operator of the next location based on the corresponding element to obtain coordinate information of the next location.

In the drawing table area detection method according to the present invention, the step of performing table area detection based on the inner border of the drawing to obtain all table areas in the drawing to be detection comprises:

Performing detection based on the inner border of the drawing to obtain an effective inflection point set;
Performing table area detection based on the effective inflection point set to obtain all table areas in the drawing to be detection.

In the drawing table area detection method according to the present invention, the step of performing detection based on the inner border of the drawing to obtain an effective inflection point set comprises:

Step c1. Drawing a moving straight line perpendicular to the horizontal axis at the origin of the coordinate axis, and moving it to the right along the horizontal axis in steps of one pixel from the origin;
Step c2. After each movement, calculating the number of intersection points between the moving straight line and the inner border of the drawing, and judging whether the number of intersection points is greater than a threshold value, and if the number of intersection points is greater than the threshold value, executing step c3, otherwise returning to step c1 to continue moving the moving straight line;
Step c3: respectively calculating the intersection point between a first straight line located on the left side of the moving straight line and the inner border of the drawing and the intersection point between a second straight line located on the right side of the moving straight line and the border of the drawing, and obtaining a first intersection point set and a second intersection point set; The first intersection point set contains all intersection points between the first straight line located on the left side of the moving straight line and the border of the drawing, and The second intersection point set contains all intersection points between the second straight line located on the right side of the moving straight line and the border of the drawing;
Step c4: obtaining a first judgment value and a second judgment value based on the first intersection point set and the second intersection point set, and performing calculation based on the first judgment value and the second judgment value to obtain an effective inflection point;
Step c5. Repeating the steps c2 to c4 until the moving straight line stops when it moves to the rightmost border of the inner border of the drawing.

In the drawing table area detection method according to the present invention, the step of obtaining a first judgment value and a second judgment value based on the first intersection point set and the second intersection point set, and performing calculation based on the first judgment value and the second judgment value to obtain an effective inflection point comprises:

Obtaining a first minimum ordinate and a first maximum ordinate based on the first intersection point set;
Obtaining a second minimum ordinate and a second maximum ordinate based on the second intersection point set;
calculating according to the first minimum ordinate and the second minimum ordinate to obtain the first judgment value;
calculating according to the first maximum ordinate and the second maximum ordinate to obtain the second judgment value;
judging whether the first judgment value or the second judgment value is greater than or equal to a judgment threshold;
If the first judgment value is greater than or equal to the judgment threshold, calculating an intersection point between a first vertical line and a second vertical line with the moving straight line, respectively; the intersection point between the first vertical line and the moving straight line and the intersection point between the second vertical line and the moving straight line are effective inflection points;
And/or if the second judgment value is greater than or equal to the judgment threshold value, calculating an intersection point between a third vertical line and a fourth vertical line with the moving straight line, respectively; the intersection point between the third vertical line and the moving straight line and the intersection point between the fourth vertical line and the moving straight line are effective inflection points.

In the drawing table area detection method according to the present invention, the step of performing table area detection based on the effective inflection point set to obtain all table areas in the drawing to be detection. comprises:

Constructing an ordered set based on the effective inflection point set;
Performing table area detection based on the ordered set to obtain all table areas in the drawing to be detection.
In the drawing table area detection method according to the present invention, the step of constructing an ordered set based on the effective inflection point set comprises:
Performing a search based on the effective inflection point set to obtain an effective inflection point whose ordinate is 0;
Arranging the effective inflection points whose ordinate is 0 in descending order according to the abscissa, and indexing and numbering to form the ordered set.

In the drawing table area detection method according to the present invention, the step of performing table area detection based on the ordered set to obtain all table areas in the drawing to be detection comprises:

According to the ordered set, determining a head-to-end table area of the upper boundary of the inner border of the drawing and a head-to-end table area of the lower boundary of the inner border of the drawing by adopting a diagonal vertex method;
After the detection of the head-to-end table area of the upper boundary and the head-to-end table area of the lower boundary, teaming the remaining effective inflection points in the ordered set according to the index parity principle;
After the teaming, determining the middle table area of the upper boundary of the inner border of the drawing and the middle table area of the lower boundary of the inner border of the drawing by a diagonal vertex method.

The present invention also provides a drawing table area detection apparatus, comprises:

An acquisition unit for acquiring an original image of a drawing to be detection;
A preprocessing unit for preprocessing the original image of the drawing to be detection to obtain a binary image of the drawing to be detection;
A selecting unit for selecting an initial point in the binary image of the drawing to be detection;
A border detection unit for performing inner border detection on the binary image of the drawing to be detection by a point-by-point path finding method based on the initial point to obtain an inner border of the drawing;
A table area detection unit for performing table area detection based on an inner border of the drawing to obtain all table areas in the drawing to be detection;
A table extraction unit for performing table extraction on all table areas in the drawing to be detection to obtain all tables in the drawing to be detection.

The present invention also provides a storage medium storing a computer program adapted to be loaded by a processor to perform the steps of the drawing table area detection method as described above.
The present invention also provides an electronic device comprising a memory having a computer program stored therein and a processor, the processor performing the steps of the drawing table area detection method as described above by calling the computer program stored in the memory.
The drawing table area detection method and apparatus, and the storage medium and the electronic device of the present invention have the following beneficial effects: comprising the following steps: acquiring an original image of a drawing to be detection; Preprocessing the original image of the drawing to be detection to obtain a binary image of the drawing to be detection; Selecting an initial point in the binary image of the drawing to be detection; performing inner border detection on the binary image of the drawing to be detection by a point-by-point path finding method based on the initial point to obtain an inner border of the drawing; Performing table area detection based on the inner border of the drawing to obtain all table areas in the drawing to be detection; performing table extraction on all table areas in the drawing to be detection to obtain all tables in the drawing to be detection. By performing pixel-level processing on the image, the invention avoids a large amount of data annotation work in the deep learning method, does not need to consume a large amount of resources for model training, does not need the support of an AI team, and has low cost; Furthermore, the present invention is not disturbed by the contents of the drawings and has high accuracy.

BRIEF DESCRIPTION OF THE SEVERAL VIEWS OF THE DRAWINGS

The present invention will be further described below with reference to the accompanying drawings and embodiments, in which:

FIG.1 is a schematic flow diagram of a drawing table area detection method according to the present invention;
FIG.2 is a schematic view of an inner border of a drawing provided by the present invention;
FIG.3 is a schematic diagram of a obstacle category provided by the present invention;
FIG. 4 is a schematic diagram of an inflection point provided by the present invention;
FIG.5 is a schematic diagram of an effective inflection point and an invalid inflection point provided by the present invention;
FIG.6 is a schematic diagram of effective inflection point acquisition provided by the present invention;
FIG.7 is a schematic illustration of all effective inflection points of the drawings provided by the present invention;
FIG.8 is a schematic diagram of the head-to-end table area of the upper boundary provided by the present invention;
FIG.9 is a schematic diagram of an intermediate table area of an upper boundary provided by the present invention;
FIG. 10 is a logical block diagram of a drawing table area detection apparatus according to the present invention.

DETAILED DESCRIPTION OF THE INVENTION

Hereinafter, the technical solutions in the embodiments of the present invention will be clearly and completely described with reference to the drawings in the embodiments of the present invention, and it is obvious that the described embodiments are only a part of the embodiments of the present invention, but not all the embodiments. Based on the embodiments in the present invention, all other embodiments obtained by those skilled in the art without creative work fall within the scope of protection of the present invention.

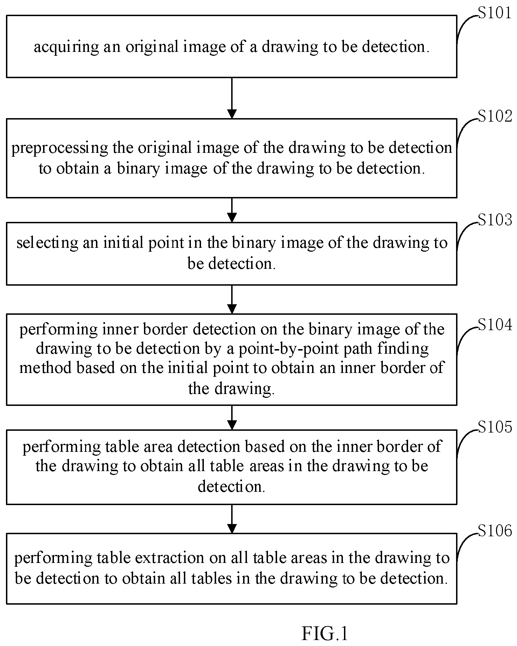

FIG.1 shows a preferred embodiment of a drawing table area detection method according to the present invention. The drawing table area detection method is a drawing table area detection method based on heuristic algorithm and convolution operator, and it is a table area detection method based on image processing. Wherein, the drawing table area detection method can be applied to table area detection in nuclear power drawings. Specifically, there are an direction convolution operator, a scene convolution operator and a coordinate convolution operator in the present invention, and these three operators are used to control the search direction, and combined with the idea of the greedy heuristic algorithm, the inner border of the drawing (referring to the maximum area containing the contents of the drawing) can be optimally found. Then, by means of the calculation of pixel inflection point, the tables in nuclear power drawings are accurately located, and finally, the image of the drawings is cut based on the inflection point to extract all the tables in the drawings.

Wherein, the convolution operator is a fixed size matrix whose central element is called an anchor point.

The direction convolution operator is a convolution operator used for controlling the search direction when recognizing drawing tables. Specifically, in the present embodiment, the directional convolution operator may be represented by a 3 * 3 matrix representing the direction in which the point moves forward during the process of representing the movement path of a point, wherein the forward direction is determined by the orientation of the element 1 relative to the anchor point. When the four elements of the upper, lower, left and right of the anchor point are 1, they indicate that the path finding direction is upward, downward, left and right respectively. In the directional convolution operator, there is and only one element 1, and the remaining elements are 0. The directional convolution operators designed and used in this invention are the $D_1 \sim D_4$. In the table area detection method of nuclear power drawings, the direction convolution operator of an initial point is set to $D_3$ by default.

$$D_1 = \begin{pmatrix} 0 & 1 & 0 \\ 0 & 0 & 0 \\ 0 & 0 & 0 \end{pmatrix}, D_2 = \begin{pmatrix} 0 & 0 & 0 \\ 0 & 0 & 0 \\ 0 & 1 & 0 \end{pmatrix}, D_3 = \begin{pmatrix} 0 & 0 & 0 \\ 1 & 0 & 0 \\ 0 & 0 & 0 \end{pmatrix}, D_4 = \begin{pmatrix} 0 & 0 & 0 \\ 0 & 0 & 1 \\ 0 & 0 & 0 \end{pmatrix};$$

The scene convolution operator is a convolution operator for representing pixel point information around a pixel point when drawing recognition is performed. Specifically, in this embodiment, the scene convolution operator is represented by a 3 * 3 matrix representing environmental information around the current location of the point (i.e., the location of the anchor point). In the scene convolution operator, the element value is 0 or 255. Wherein, definition 255 represents the background point of the drawing, and 0 represents the border point of the drawing. An example of a typical drawing scene convolution operator is as follows.

$$E_1 = \begin{pmatrix} 255 & 255 & 255 \\ 255 & 255 & 255 \\ 255 & 255 & 255 \end{pmatrix}$$

$$E_2 = \begin{pmatrix} 0 & 255 & 255 \\ 0 & 255 & 255 \\ 0 & 255 & 255 \end{pmatrix}$$

Wherein, $E_1$ represents that the nine pixels around the location of the node are all background points, while $E_2$ represents that the three pixels on the left side of the node are all border points, which are impassable.

The coordinate convolution operator is a convolution operator for representing pixel point coordinate information when performing drawing recognition. Specifically, in the present embodiment, the coordinate convolution operator is represented by a 3 * 3 matrix, which represents coordinate information of elements around the anchor point, as shown in the following example;

$$P_i = \begin{pmatrix} x-1, y-1 & x, y-1 & x+1, y-1 \\ x-1, y & x, y & x+1, y \\ x-1, y+1 & x, y+1 & x+1, y-1 \end{pmatrix} \quad (1) \ .$$

Where $P_i$ represents the coordinate convolution operator of anchor point i, where the coordinates of point i are (x, y).

Specifically, as shown in FIG.1, the drawing table area detection method includes the following steps:

Step S101: Acquiring an original image of a drawing to be detection.

Specifically, in this step, the original image of a drawing to be detection can be acquired by any existing method, for example, it can be directly called from a database, or it can be directly imported by a user, or the like. The present invention is not particularly limited.

Step S102: Preprocessing the original image of the drawing to be detection to obtain a binary image of the drawing to be detection.

In this embodiment, preprocessing the original image of the drawing to be detection to obtain a binary image of the drawing to be detection includes: performing gamma transformation on the original image of the drawing to be detection to obtain an enhanced image; performing gray-scale processing on the enhanced image to obtain a gray-scale image of the drawing to be detection; performing binary processing on gray-scale image of the drawing to be detection, and performing inversion processing on the image after binary processing to obtain the binary image of the drawing to be detection.

Specifically, after acquiring an original image of the drawing to be detection, gamma transformation is first performed on the original image to adjust image brightness, increase contrast, eliminate noise, improve visual effect, and the like, so as to achieve the purpose of enhancing the image. Then, the enhanced image is grayed to obtain the gray-scale image of the drawing, and the gray-scale image of the drawing is binarized, and then the image after binary processing is inverted to finally obtain the binary image of the drawing to be detection. Wherein, in the obtained binary image, a point having a pixel value of 255 represents a background point of the drawing sheet, and a point having a pixel value of 0 represents a border point of the drawing sheet.

Step S103: Selecting an initial point in the binary image of the drawing to be detection.

In the present embodiment, selecting an initial point in the binary image of the drawing to be detection includes the following steps:

Step a1. Selecting a point randomly as an anchor point in the binary image of the drawing to be detection.

Step a2. Obtaining a scene convolution operator of the anchor point.

Step a3: Detecting whether all element values in the scene convolution operator of the anchor point are a preset value.

Step a4. If so, selecting the anchor point as the initial point.

Step a5. If not, moving one pixel distance to the left and repeating steps a1 to a4 to re-select the initial point.

Specifically, a point is randomly selected as an anchor point in the binary image of the drawing to be detection, and the point is a starting point for finding a path. Then, obtaining the scene convolution operator of the anchor point, detecting whether the values of all elements in the scene convolution operator of the anchor point are 255, if so, selecting the point as an initial point, and if not, moving one pixel distance to the left, and then re-selecting according to the above rules.

Step S104: performing inner border detection on the binary image of the drawing to be detection by a point-by-point path finding method based on the initial point to obtain an inner border of the drawing.

In the present embodiment, the inner border detection is performed on the binary image of the drawing to be detection by a point-by-point path finding method based on the initial point, and obtaining the inner border of the drawing includes the following steps:
Step b1: Setting a moving step by taking the initial point as a starting point. The moving step may be set to one pixel.

Step b2: after setting the moving step, judging whether a next location will encounter an obstacle adopting an obstacle judgment algorithm, and if there is no obstacle, moving with the moving step; if there is an obstacle, executing the following step b3.

Wherein, in step b2, an obstacle judgment algorithm is used to judge whether the next location will encounter an obstacle includes: performing matrix dot product on the direction convolution operator and the scene convolution operator of the previous location to obtain a result matrix; Judging whether the result matrix is a 0 matrix; If the result matrix is 0 matrix, it is determed that there is an obstacle in the next location; If the result matrix is not a 0 matrix, it is determed that there is no obstacle to the next location. Specifically, assume that point A is the initial point, and the direction convolution operator, scene convolution operator, and coordinate convolution operator of point $A$ are denoted as $A_D$, $A_E$, and $A_P$, respectively; Let the new point after point $A$ is moved by one step be $A'$, and the direction convolution operator, scene convolution operator and coordinate convolution operator of point $A'$ are denoted as $A'_D$, $A'_E$ and $A'_P$ respectively.

When point $A$ uses the direction convolution operator $A_D$ to move and find a path, it needs to judge whether the moved location is an obstacle. If the next location is an obstacle, it needs to adjust the direction convolution operator. The direction convolution operator $A_D$ and the scene convolution operator $A_E$ of point $A$ are performing matrix dot product, and then it is judged whether the result matrix R is a 0 matrix (all elements in the matrix are 0). If the result matrix is a 0 matrix, it means that the next point is an obstacle; If it is not a 0 matrix, it means that the next point is a background element point. The specific formula is as follows. The returned result y represents barrier and n represents barrier-free.

$$(\boldsymbol{R} = \boldsymbol{A_D} \odot \boldsymbol{A_E}) == \boldsymbol{0}?\, y: \mathrm{n}$$

Step b3: Performing category calculation by adopting an obstacle category determination algorithm to obtain an obstacle category; Obstacle category includea: a flat obstacle, a concave obstacle or a convex obstacle.

In the present embodiment, performing category calculation using an obstacle category determination algorithm in step b3 includes: obtaining the number of 0 elements in the 0 matrix when the result matrix is a 0 matrix; If the number of 0 elements in the 0 matrix is a first value, it is a flat obstacle; If the number of 0 elements in the 0 matrix is a second value, it is a concave obstacle; If the number of 0 elements in the 0 matrix is a third value, it is a convex obstacle. Wherein the first value is 3, the second value is 5, and the third value is 1.

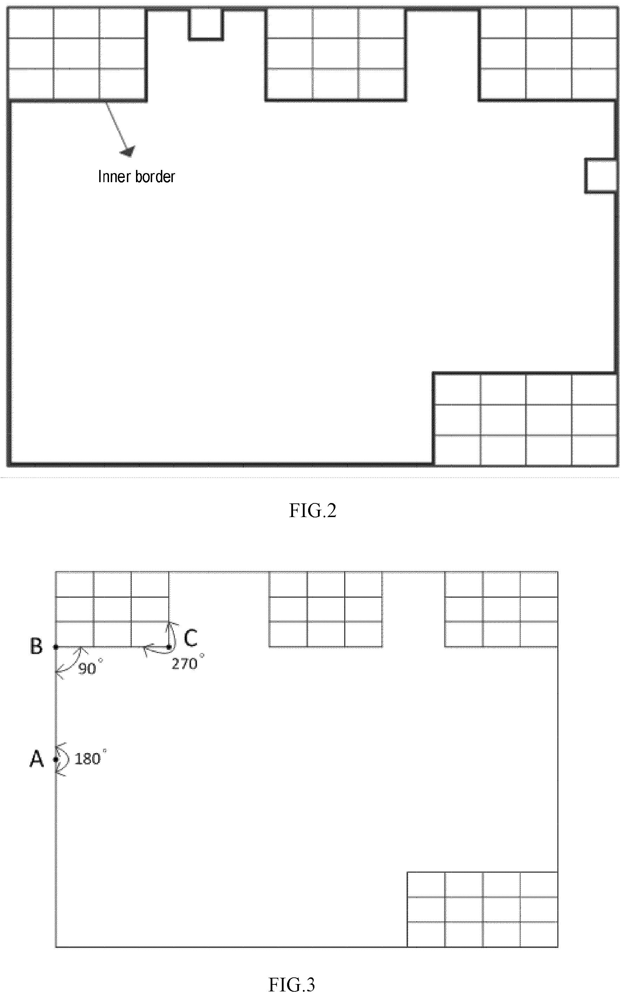

In this embodiment, a flat obstacle: the angle between the horizontal line and the vertical line is equal to 180°, and this kind of obstacle is called a flat obstacle, as shown at point A in FIG.3; a concave obstacle: The angle between the horizontal line and the vertical line is equal to 90°, and this kind of obstacle is called a concave obstacle, as shown at point B in FIG.3; a convex obstacle: The angle between the horizontal line and the vertical line is equal to 270°, and this kind of obstacle is called a convex obstacle, as shown at point C in FIG.3.

Step b4, according to the obstacle category obtained by calculation, updating the direction convolution operator of the previous location by using a path-finding direction calculation algorithm to obtain an updated direction convolution operator of the previous location.

In the present embodiment, in step b4, according to the obstacle category obtained by calculation, updating the direction convolution operator of the previous location by using a path-finding direction calculation algorithm to obtain an updated direction convolution operator of the previous location includes: if the calculated obstacle category is a flat obstacle or a concave obstacle, rotating the direction convolution operator of the previous location clockwise by a preset angle to obtain the updated direction convolution operator of the previous location; If the calculated obstacle category is a convex obstacle , the direction convolution operator of the previous location is rotated counterclockwise by a preset angle to obtain the updated direction convolution operator of the previous location. Wherein, the preset angle is 90°.

Specifically, when an obstacle is encountered in the process of path finding, the directional convolution operator of the current point A needs to be updated in real time, and the updated directional convolution operator is assumed to be $A_{D_{new}}$. First, judge whether A' is an obstacle, if not, make $A_{D_{new}} = A_D$; If it is an obstacle, the obstacle category is calculated according to step b3; If it is a flat obstacle, rotate $A_D$ clockwise by 90° to obtain $A_{D_{new}}$; If it is a concave obstacle, rotate $\boldsymbol{A_D}$ clockwise by 90° to obtain $A_{D_{new}}$; If it is a convex obstacle, rotate $\boldsymbol{A_D}$ counterclockwise by 90° to obtain $A_{D_{new}}$; Finally, taking $A_{D_{new}}$ as the direction convolution operator of the current point A, and continue the process of path finding.

Step b5: adopting the updated direction convolution operator of the initial point, calculating coordinate information of a next location according to the moved point coordinate calculation algorithm, and moving to the next location.

In the present embodiment, in step b5, adopting the updated direction convolution operator of the previous location, calculating coordinate information of a next location point according to the moved point coordinate calculation algorithm, including: performing matrix dot product between the coordinate convolution operator of the previous location and the updated direction convolution operator of the previous location to obtain a dot product result matrix; Extracting non-zero elements in the dot product result matrix; search in the coordinate convolution operator of the previous location by taking the subscript of the non-zero element in the dot product result matrix as an index to obtain the corresponding element in the coordinate convolution operator of the previous location; reconstructing the coordinate convolution operator of the next location based on the corresponding element to obtain the coordinate information of the next location.

Specifically, in the present embodiment, the calculation process of the coordinate scene convolution operator of the next location A' is as follows:

First, the updated directional convolution operator $A_{D_{new}}$ of point A is calculated according to the step b4, as shown in the following formula. Wherein, only one of $a_{01}$, $a_{13}$, $a_{21}$, $a_{10}$ has a value of 1.

$$A_{D_{new}} = \begin{pmatrix} 0 & a_{01} & 0 \\ a_{10} & 0 & a_{13} \\ 0 & a_{21} & 0 \end{pmatrix};$$

Then, performing matrix dot product on the coordinate convolution operators $A_P$ and $A_{D_{new}}$ of A, and retrieving the subscripts i,j of the unique non-zero elements in the result matrix of the dot product, taking this subscript as the index to obtain the corresponding element $p_{ij} = (px_{ij}, py_{ij})$ in the $A_P$, the coordinate convolution operator of A' is reconstructed according to formula (1) by using $(px_{ij}, py_{ij})$ as an anchor point, and obtaining the coordinates of the new point A' after the movement.

$$(i, j)_{new} = \max_{\substack{i,j \\ a_{ij} \neq 0}} (A_P \odot A_{D_{new}})$$

$$A'_P = \begin{pmatrix} px_{ij} - 1, py_{ij} - 1 & px_{ij}, py_{ij} - 1 & px_{ij} + 1, py_{ij} - 1 \\ px_{ij} - 1, py_{ij} & px_{ij}, py_{ij} & px_{ij} + 1, py_{ij} \\ px_{ij} - 1, py_{ij} + 1 & px_{ij}, py_{ij} + 1 & px_{ij} + 1, py_{ij} - 1 \end{pmatrix};$$

Where $A'_P$ denotes the coordinates of the new point A' after the movement.

Step b6: Repeating steps b2 to b5 to perform path finding until the path finding is stopped when the path finding meets the path have passed in the path finding process, and obtaining the inner border of the drawing. Wherein, the inner border of the drawing is shown in FIG.2.

Step S105: performing table area detection based on the inner border of the drawing, to obtain all table areas in the drawing to be detection.

In the present embodiment, performing table area detection based on the inner border of the drawing to obtain all table areas in the drawing to be detection includes: performing detection based on the inner border of the drawing to obtain an effective inflection point set; performing table area detection based on the effective inflection point set to obtain all table areas in the drawing to be detection.

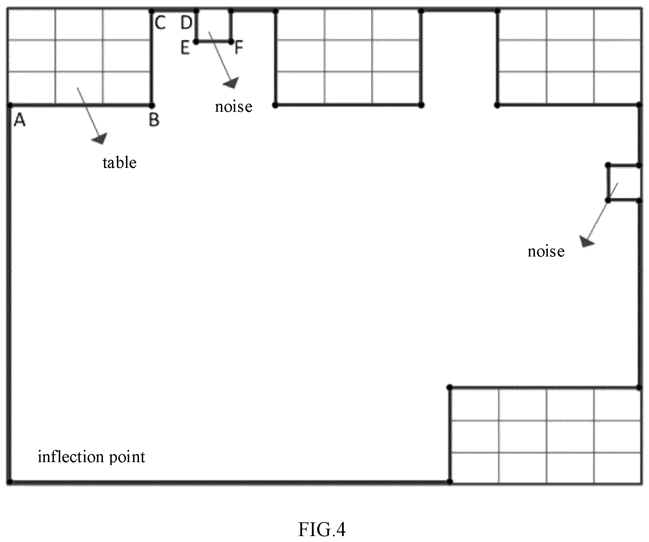

Document information tables, parts lists, spare parts lists, etc. in the drawings are referred to as tables, and other cells attached to the borders are referred to as noises, as shown in FIG.4. Further, the inflection point refers to the convex point and concave point where the forward direction changes when an obstacle is encountered during the path finding process. The black dots in FIG.4 are all inflection points. Wherein, the inflection point attached to the inner border of the table is called an effective inflection point, such as the A/B/C point in FIG. 4, and the inflection point attached to the noisy inner border is called an invalid inflection point, such as the D/E/F point in FIG.4.

In this embodiment, a basis for subsequent determination of the drawing table area is provided by finding an effective inflection point in the obtained inner border of the drawing. Specifically, performing detection based on the inner border of the drawing to obtain an effective inflection point set includes the following steps:

Step c1. Drawing a moving straight line perpendicular to the horizontal axis at the origin of the coordinate axis, and moving it to the right along the horizontal axis in steps of one pixel from the origin.

Step c2: After each movement, calculating the number of intersection points between the moving straight line and the inner border of the drawing, and judging whether the number of intersection points is greater than a threshold value, if the number of intersection points is greater than the threshold value, executing step c3, otherwise, returning to step c1 to continue moving the moving straight line.

Step c3: respectively calculating the intersection point between a first straight line located on the left side of the moving straight line and the inner border of the drawing and the intersection point between a second straight line located on the right side of the moving straight line and the border of the drawing, and obtaining a first intersection point set and a second intersection point set; The first intersection point set contains all the intersection points between the first line located on the left side of the moving line and the border of the drawing, and set contains all the intersection points between the second line located on the right side of the moving line and the border of the drawing.

Step c4: Obtaining a first judgment value and a second judgment value based on the first intersection point set and the second intersection point set, and performing calculation based on the first judgment value and the second judgment value to obtain an effective inflection point. Wherein obtaining a first judgment value and a second judgment value based on the first intersection point set and the second intersection point set, and performing calculation based on the first judgment value and the second judgment value to obtain an effective inflection point includes: obtaining a first minimum ordinate and a first maximum ordinate based on the first intersection point set; Obtaining a second minimum ordinate and a second maximum ordinate based on the second intersection point set; Calculating according to the first minimum ordinate and the second minimum ordinate to obtain a first judgment value; Calculating according to the first maximum ordinate and the second maximum ordinate to obtain a second judgment value; Judging whether the first judgment value or the second judgment value is greater than or equal to a judgment threshold value; If the first judgment value is greater than or equal to the judgment threshold, calculating the intersection points of a first vertical line and a second vertical line with the moving straight line, respectively; The intersection point of the first vertical line and the moving straight line and the intersection point of the second vertical line and the moving straight line are effective inflection points; And/or if the second judgment value is greater than or equal to the judgment threshold value, calculating an intersection point of a third vertical line and a fourth vertical line with the moving straight line, respectively; The intersection point of the third vertical line and the moving straight line and the intersection point of the fourth vertical line and the moving straight line are effective inflection points.

Step c5. Repeating steps c2 to c4 until the moving straight line stops when it moves to the rightmost border of the inner border of the drawing.

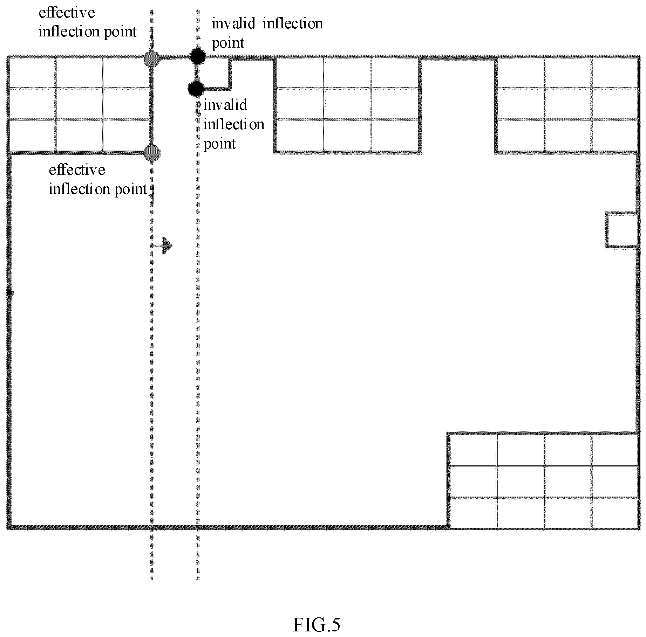

Further, before executing step c1, an effective inflection point array may be set to M, and the effective inflection point array M is used to store all the effective inflection points obtained by the above method. In addition, the inflection points on the inner borders on the left and right sides of the drawing are defaulted to effective inflection points and added to the array M. Wherein, the effective inflection point and the invalid inflection point are shown in FIG. 5.

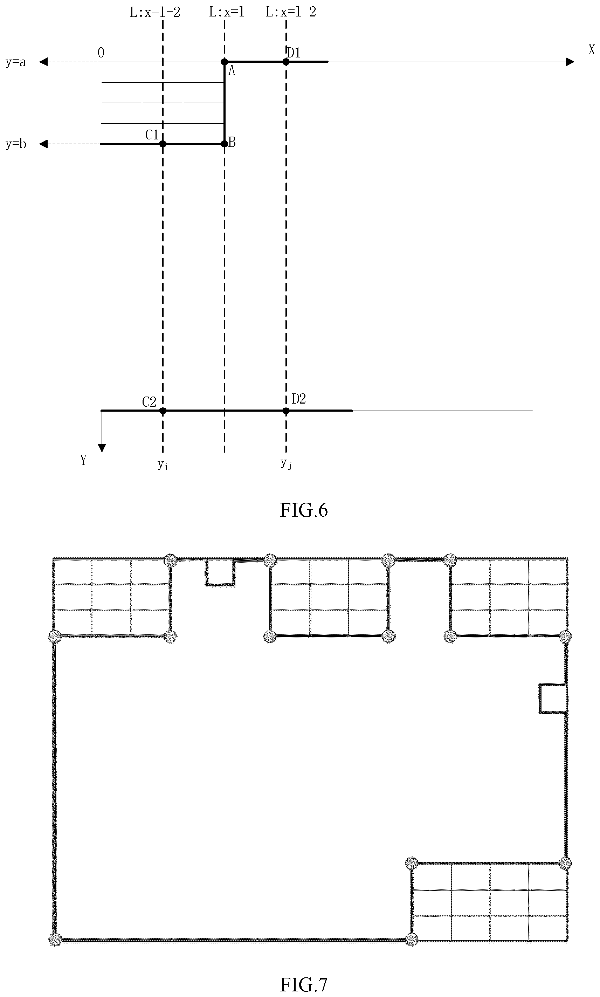

Specifically, as shown in FIG. 6:

A first Step : Setting the effective inflection point array M.

A second Step: Making a moving straight line L (x = 0) at the origin of the coordinate axis (assuming that the upper left corner of the inner border of the drawing is the origin of the coordinate axis), and moving to the right along the horizontal axis, moving to the right by a distance of one pixel at a time.

A third Step: After each movement, calculating the number of intersection points between the moving straight line L (at this time, $x=l$, and the specific value of $l$ is the moved distance) and the inner border of the drawing. If the number of intersection points is greater than or equal to a threshold (i.e. $NUM_\varepsilon$ (generally $NUM_\varepsilon$ is equal to 16)), then execute a fourth step; If the number of intersection points is less than a threshold $NUM_\varepsilon$, jump to the second step and continue to move until it move to the rightmost border of the drawing and stop;

A fourth Step: calculating the first straight line $L1: x = l - k$ (generally, the distance (i.e. k) between the first straight line and the moving straight line is at least 2 pixels, of course, in some other embodiments, it may also be 3 pixels, 4 pixels or more, etc., wherein in order to ensure detection accuracy and reliability, k is preferably 2, That is, the distance between the first straight line and the moving straight line is preferably two pixels. ) and the inner border, let the intersection point set be $LEFT = \{(l-2, y_i)|i = 1,2, ..., n\}$; The second straight line $L2: x = l + 2$ is calculated (Similarly, the distance (i.e. k) between the second straight line and the moving straight line is at least 2 pixels, of course, in some other embodiments, it may also be 3 pixels, 4 pixels or more, etc., wherein k is preferably 2 in order to ensure detection accuracy and reliability, That is, the distance between the second straight line and the moving straight line is preferably two pixels. ) and the intersection point of the inner border, let the intersection point set be $RIGHT = \{(l + 2, y_j)|j = 1,2, ..., m\}$.

A fifth Step: setting the judgment threshold value of the effective inflection point as $NUM_\phi$, recording $a = min\ y_i$ (a first minimum ordinate), $b = min\ y_j$ (a second minimum ordinate), $c = max\ y_i$ (a first maximum ordinate), $d = max\ y_j$ (a second maximum ordinate), calculating the first judgment value and the second judgment value, Wherein the first judgment value is $\Delta_1$, the calculation formula is $\Delta_1 = |a - b|$, the first judgment value is $\Delta_2$, the calculation formula is $\Delta_2 = |c - d|$, if $\Delta_1 \geq NUM_\phi$, the intersection points of the straight line $y = a$ the straight line $y = b$ and the straight line $L: x = l$ are respectively calculated, This intersection point (i.e. point A and point B in FIG. 6) is the effective inflection point, and the effective inflection point is added to the effective inflection point array M; If $\Delta_2 \geq NUM_\phi$, the intersection points of straight line $y = c$, straight line $y = d$ and straight line $L: x = l$ are calculated respectively. This intersection point is an effective inflection point, and the effective inflection point is added to the effective inflection point array M. For example, as shown in FIG. 6, where k = 2 in this embodiment, and $LEFT = \{C_1, C_2\}$, $RIGHT = \{D_1, D_2\}$, $a=C_1$, $b=D_1$, $c=C_2$, $d=D_2$, $\Delta_1 = |C_1 - D_1|$, $\Delta_2 = |C_2 - D_2|$.

A sixth Step: Continue to move the straight line L, and repeat the second to third steps until move to the rightmost border of the drawing and stop, so as to obtain the effective inflection point array M. Wherein, all effective inflection points in the drawing are shown in FIG.7.

In the present embodiment, performing table area detection based on the effective inflection point set to obtain all table areas in the drawing to be detection includes: constructing an ordered set based on the effective inflection point set; performing table area detection based on the ordered set to obtaining all table areas in the drawing to be detection.

Specifically, constructing an ordered set based on the effective inflection point set includes: performing a search based on the effective inflection point set to obtain an effective inflection point whose ordinate is 0; arranging the effective inflection point whose ordinate is 0 in descending order according to the abscissa, and indexing and numbering them to form an ordered set.

In the present embodiment, performing table area detection based on the ordered set to obtain all table areas in the drawing to be detection includes: according to the ordered set, determining a head-to-end table area of the upper boundary of the inner border of the drawing and a head to end table area of the lower boundary of the inner border of the drawing by adopting a diagonal vertex method; after the detection of the head-to-end table area of the upper boundary and the head-to-end table area of the lower boundary, teaming the remaining effective inflection points in the ordered set according to the index parity principle; after the teaming, determining the middle table area of the upper boundary of the inner border of the drawing and the middle table area of the lower boundary of the inner border of the drawing by a diagonal vertex method.

Specifically, when locating the table area, since the drawing tables are all rectangular and distributed on the upper and/or lower boundary lines of the drawing, it is only necessary to determine a pair of diagonal vertices of the rectangular to achieve the locating of the table area. Therefore, when the effective inflection point set M is obtained, locating the table area by the following method:

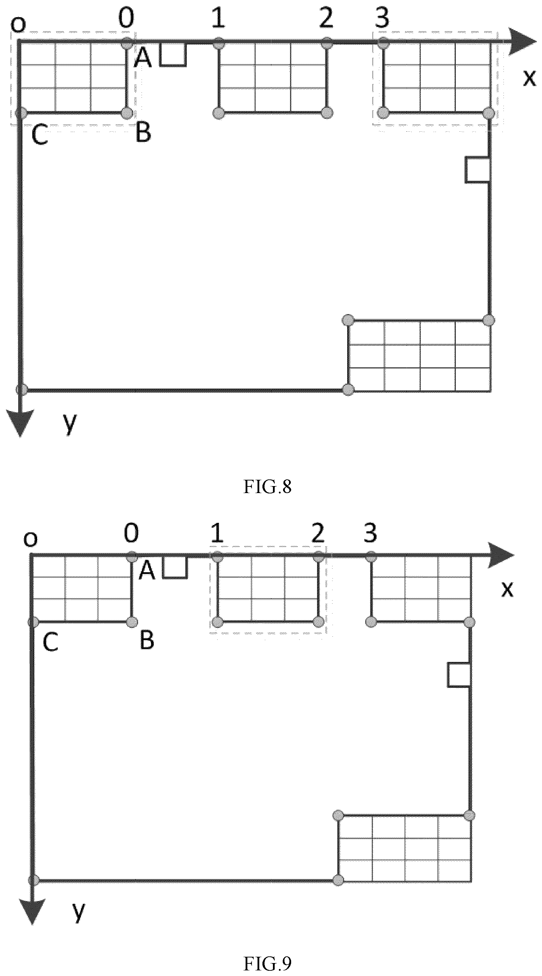

A first Step: Searching all the effective inflection points on the upper boundary of the inner border of the drawing (that is, searching the effective inflection point whose ordinate is 0), arranging the effective inflection point whose ordinate is 0 in descending order according to the abscissa, and performing index and numbers, and the index numbers start from 0 to form an ordered set $MX = \{(x_i, 0)|x_i < x_{i+1}, i = 0,1,2, ..., n)\}$. Wherein, the ordered set $MX$ is shown in FIG.8.

A second Step: Determining the head-to-end table area of the upper boundary line. Let the effective inflection point with index 0 be $A(x_0,y_0)$, and search for the point of $x=x_0$ in the set $MX$ to form the set MX0. Take out the point with the largest ordinate in MX0 and set it as $B(x_0,y_1)$. The point with ordinate $y_1$ is found in the set M to form the set MY0, and the point C with the smallest abscissa is taken out in MY0. From the diagonal vertices A and C, the first table area on the upper boundary can be determined (as shown in the table in the upper left corner of FIG.8). In the same way, the last table area on the upper boundary can be determined (as shown in the table in the upper right corner of FIG.8).

A third Step: Determining the table area in the middle of the upper boundary line. For the remaining points in the set MX (the remaining points after excluding the indexes 0 and n), teaming up according to the principle of "odd-even" indexes:

$$\langle(x_1, 0), (x_2, 0)\rangle, \langle(x_3, 0), (x_4, 0)\rangle, ..., \langle(x_i, 0), (x_{i+1}, 0)\rangle, ..., \langle(x_{n-2}, 0), (x_{n-1}, 0)\rangle$$

Since the point $E(x_i, 0)$ and the point $F(x_{i+1}, 0)$ must belong to the i-th table on the upper boundary line. According to the method of determining the diagonal coordinate of the point in the second step, the diagonal coordinate K of the point $E(x_{i+1}, 0)$ can be determined, and the i-th table on the upper boundary line can be determined by E and K. As shown in FIG.9.

A fourth step: Using the same method as in the second and third steps, all the table areas on the lower boundary can be determined, so that all the table areas in the drawing to be detection can be obtained.

Step S106: Performing table extraction on all table areas in the drawing to be detection to obtain all tables in the drawing to be detection. Specifically, after completing the locating of all table areas, all tables of the drawing to be detection can be obtained by cutting based on the coordinates of all table areas.

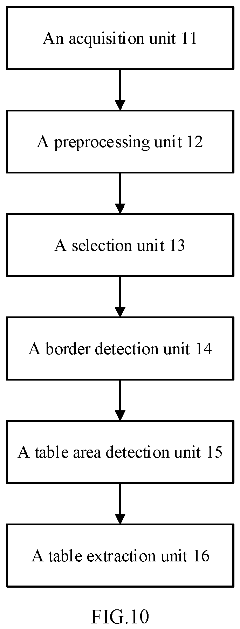

FIG. 10 shows a drawing table area detection apparatus according to the present invention. As shown in FIG. 10, the drawing table area detection apparatus includes:

An acquisition unit 11 for acquiring an original image of the drawing to be detection.

A preprocessing unit 12 for preprocessing the original image of the drawing to be detection to obtain a binary image of the drawing to be detection.

A selection unit 13 for selecting an initial point in the binary image of the drawing to be detection.

A border detection unit 14 for performing inner border detection on the binary image of the drawing to be detection by a point-by-point path finding method based on the initial point to obtain an inner border of the drawing.

A table area detection unit 15 for performing table area detection based on the inner border of the drawing to obtain all the table areas in the drawing to be detection.

A table extraction unit 16 for performing table extraction on all table areas in the drawing to be detection to obtain all tables in the drawing to be detection.

Specifically, the specific cooperation operation process between the units in the drawing table area detection apparatus herein can be specifically described with reference to the above-described drawing table area detection method, and will not be repeatedly described herein.

The drawing table area detection method and apparatus provided by the present invention avoid a large amount of data labeling work based on a deep learning method by performing pixel-level processing on an image, do not need to consume a large amount of resources for model training, and also meet the performance requirements that can be applied in engineering. In addition, every step of the algorithm is interpretable. The invention is used for testing in 50 nuclear power drawing documents, and the average time consumption is 0.7 seconds, and the accuracy reaches 100%, which reaches the engineering application standard.

Further, an electronic device of the present invention includes a memory and a processor; A memory for storing a computer program; The processor is configured to execute a computer program to implement the drawing table area detection method according to any of the above. In particular, according to an embodiment of the present invention, the process described above with reference to the flowchart may be implemented as a computer software program. For example, embodiments of the present invention include a computer program product including a computer program carried on a computer readable medium, the computer program containing program code for performing the method shown in the flowchart. In such an embodiment, the computer program may be downloaded and installed by an electronic device and when executed, performs the above-described functions defined in the method of the embodiment of the present invention. The electronic device according to the present invention may be a terminal such as a notebook, a desktop computer, a tablet computer, or a smartphone, or may be a server.

Further, a storage medium according to the present invention has a computer program stored thereon, and when the computer program is executed by a processor, the drawing table area detection method according to any one of the above items is implemented. Specifically, the storage medium of the present invention may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or a combination of any of the above. More specific examples of computer-readable storage media may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present invention, a computer-readable storage medium may be any tangible medium containing or storing a program that may be used by or in conjunction with an instruction execution system, apparatus, or device. In the present invention, the computer-readable signal medium may include a data signal propagated in a baseband or as part of a carrier wave, carrying computer-readable program code therein. Such propagated data signals may take a variety of forms, including, but not limited to, electromagnetic signals, optical signals, or any suitable combination of the foregoing. The computer-readable signal medium may also be any computer-readable medium other than a computer-readable storage medium that may transmit, propagate, or transmit a program for use by or in connection with an instruction execution system, apparatus, or device. The program code contained on the computer-readable medium may be transmitted using any suitable medium, including, but not limited to, wires, optical cables, RF (radio frequency), or the like, or any suitable combination of the foregoing.

The computer-readable medium may be included in the electronic device described above; It may also exist alone without being assembled into the electronic device.

In the present specification, each embodiment is described in a stepwise manner, and the differences between each embodiment and other embodiments are emphasized, and the same and similar parts between each embodiment can be referred to each other. As for the apparatus disclosed in the embodiment, since the apparatus corresponds to the method disclosed in the embodiment, the description is relatively simple, and the description of the method section can be refer to for related details.

Those skilled in the art may further appreciate that the elements and algorithmic steps of the examples described in connection with the embodiments disclosed herein can be implemented in electronic hardware, computer software, or a combination of both, and in order to clearly illustrate the interchangeability of hardware and software, the components and steps of the examples have been described generally in terms of functionality in the foregoing description. Whether these functions are performed in hardware or software depends on the specific application and design constraints of the technical solution. Those skilled in the art may use different methods for implementing the described functions for each particular application, but such implementations should not be considered beyond the scope of the present invention.

The steps of the methods or algorithms described in connection with the embodiments disclosed herein may be implemented directly in hardware, a processor-executed software module, or a combination of both. The software module may be placed in random access memory (RAM), memory, read-only memory (ROM), electrically programmable ROM, electrically erasable programmable ROM, registers, hard disk, removable magnetic disk, CD-ROM, or any other form of storage medium known in the art.

The above embodiments are merely intended to illustrate the technical concept and features of the present invention, and are intended to enable those skilled in the art to understand the contents of the present invention and implement them accordingly, and do not limit the scope of protection of the present invention. All changes and modifications equivalent to the scope of the claims of the present invention should fall within the scope of the claims of the present invention.

**Claims**

1.  A drawing table area detection method, wherein comprising the following steps:

    acquiring an original image of a drawing to be detection;
    preprocessing the original image of the drawing to be detection to obtain a binary image of the drawing to be detection;
    selecting an initial point in the binary image of the drawing to be detection;
    performing inner border detection on the binary image of the drawing to be detection by a point-by-point path finding method based on the initial point to obtain an inner border of the drawing;
    performing table area detection based on the inner border of the drawing to obtain all table areas in the drawing to be detection;
    performing table extraction on all table areas in the drawing to be detection to obtain all tables in the drawing to be detection.

2.  The drawing table area detection method according to claim 1, wherein the step of preprocessing the original image of the drawing to be detection to obtain a binary image of the drawing to be detection comprises:

    performing gamma transformation on the original image of the drawing to be detection to obtain an enhanced image;
    performing gray-scale processing on the enhanced image to obtain a gray-scale image of the drawing to be detection;
    performing binary processing on the gray-scale image of the drawing to be detection, and performing inversion processing on the image after binary processing to obtain the binary image of the drawing to be detection.

3.  The drawing table area detection method according to claim 1, wherein the step of selecting an initial point in the binary image of the drawing to be detection comprises:

    step a1, selecting a point randomly as an anchor point in the binary image of the drawing to be detection;
    step a2. obtaining a scene convolution operator of the anchor point;
    step a3, detecting whether all element values in the scene convolution operator of the anchor point are a preset value;
    step a4. if it is, selecting the anchor point as the initial point;
    step a5. if not, moving one pixel distance to the left and repeating steps a1 to a4 to re-select the initial point.

4.  The drawing table area detection method according to claim 1, wherein the step of performing inner border detection on the binary image of the drawing to be detection by a point-by-point path finding method based on the initial point to obtain an inner border of the drawing comprises:

    step b1, setting a moving step by taking the initial point as a starting point;
    step b2, after setting the moving step, judging whether a next location will encounter an obstacle adopting an obstacle judgment algorithm, and if there is no obstacle, moving with the moving step; if there is an obstacle, executing the following step b3;
    step b3, performing category calculation by adopting an obstacle category determination algorithm to obtain an obstacle category; the obstacle category comprises: a flat obstacle, a concave obstacle, or a convex obstacle;
    step b4, according to the obstacle category obtained by calculation, updating the direction convolution operator of the initial point by using a path-finding direction calculation algorithm to obtain an updated direction convolution operator of the previous location;
    step b5, adopting the updated direction convolution operator of the previous location, calculating coordinate information of a next location according to the moved point coordinate calculation algorithm, and moving to the next location;

step b6, repeating steps b2 to b5 to perform path finding until the path finding is stopped when the path finding meets the path passed in the path finding process, and obtaining the inner border of the drawing.

5. The drawing table area detection method according to claim 4, wherein in step b2, judging whether the next location will encounter an obstacle adopting an obstacle judgment algorithm comprises:

performing matrix dot product on the direction convolution operator and the scene convolution operator of the initial point to obtain a result matrix;

judging whether the result matrix is a 0 matrix;

if the result matrix is a 0 matrix, determining that there is an obstacle at the next location;

if the result matrix is not a 0 matrix, determining that there is no obstacle at the next location.

6. The drawing table area detection method according to claim 5, wherein in step b3, performing category calculation by adopting an obstacle category determination algorithm comprises:

if the result matrix is a 0 matrix, obtaining the number of 0 elements in the 0 matrix;

if the number of 0 elements in the 0 matrix is a first value, it is a flat obstacle;

if the number of 0 elements in the 0 matrix is a second value, it is a concave obstacle;

if the number of 0 elements in the 0 matrix is a third value, it is a convex obstacle.

7. The drawing table area detection method according to claim 4, wherein in step b4, according to the obstacle category obtained by calculation, updating the direction convolution operator of the previous location by using a path-finding direction calculation algorithm to obtain an updated direction convolution operator of the previous location comprises:

if the calculated obstacle category is a flat angle or a concave angle, rotating the direction convolution operator of the previous location clockwise by a preset angle to obtain the updated direction convolution operator of the previous location;

if the calculated obstacle category is a convex angle, rotating the direction convolution operator of the previous location counterclockwise by a preset angle to obtain the updated direction convolution operator of the previous location.

8. The drawing table area detection method according to claim 4, wherein in step b5, adopting the updated direction convolution operator of the previous location, calculating coordinate information of the next location according to the moved point coordinate calculation algorithm, comprises:

performing matrix dot product between the coordinate convolution operator of the previous location and the updated direction convolution operator of the previous location to obtain a dot product result matrix;

extracting non-zero elements in the dot product result matrix;

searching in the coordinate convolution operator of the previous location by taking the subscript of the non-zero element in the dot product result matrix as an index to obtain the corresponding element in the coordinate convolution operator of the previous location;

reconstructing the coordinate convolution operator of the next location based on the corresponding element to obtain coordinate information of the next location.

9. The drawing table area detection method according to claim 1, wherein the step of performing table area detection based on the inner border of the drawing to obtain all table areas in the drawing to be detection comprises:

performing detection based on the inner border of the drawing to obtain an effective inflection point set;

performing table area detection based on the effective inflection point set to obtain all table areas in the drawing to be detection.

10. The drawing table area detection method according to claim 9, wherein the step of performing detection based on the inner border of the drawing to obtain an effective inflection point set comprises:

step c1. drawing a moving straight line perpendicular to the horizontal axis at the origin of the coordinate axis, and moving it to the right along the horizontal axis in steps of one pixel from the origin;

step c2. After each movement, calculating the number of intersection points between the moving straight line and the inner border of the drawing, and judging whether the number of intersection points is greater than a threshold value, if the number of intersection points is greater than the threshold value, executing step c3, otherwise returning to step c1 to continue moving the moving straight line;

step c3, respectively calculating the intersection point between a first straight line located on the left side of the moving straight line and the inner border of the drawing and the intersection point between a second straight line located on the right side of the moving straight line and the border of the drawing, and obtaining a first intersection point set and a second intersection point set; the first intersection point set contains all intersection points between the first straight line located on the left side of the moving straight line and the border of the drawing, and contains all intersection points between the second straight line located on the right side of the moving straight line and the border of the drawing;

step c4: obtaining a first judgment value and a second judgment value based on the first intersection point set and the second intersection point set, and performing calculation based on the first judgment value and the second judgment value to obtain an effective inflection point;

step c5. repeating the steps c2 to c4 until the moving straight line stops when it moves to the rightmost border of the inner border of the drawing.

11. The drawing table area detection method according to claim 10, wherein the step of obtaining a first judgment value and a second judgment value based on the first intersection point set and the second intersection point set, and performing calculation based on the first judgment value and the second judgment value to obtain an effective inflection point comprises:

obtaining a first minimum ordinate and a first maximum ordinate based on the first intersection point set;
obtaining a second minimum ordinate and a second maximum ordinate based on the second intersection point set;
calculating according to the first minimum ordinate and the second minimum ordinate to obtain the first judgment value;
calculating according to the first maximum ordinate and the second maximum ordinate to obtain the second judgment value;
judging whether the first judgment value or the second judgment value is greater than or equal to a judgment threshold;
if the first judgment value is greater than or equal to the judgment threshold, calculating an intersection point between a first vertical line and a second vertical line with the moving straight line, respectively; the intersection point between the first vertical line and the moving straight line and the intersection point between the second vertical line and the moving straight line are effective inflection points;
and/or if the second judgment value is greater than or equal to the judgment threshold value, calculating an intersection point between a third vertical line and a fourth vertical line with the moving straight line, respectively; the intersection point between the third vertical line and the moving straight line and the intersection point between the fourth vertical line and the moving straight line are effective inflection points.

12. The drawing table area detection method according to claim 9, wherein the step of performing table area detection based on the effective inflection point set to obtain all table areas in the drawing to be detection comprises:

constructing an ordered set based on the effective inflection point set;
performing table area detection based on the ordered set to obtain all table areas in the drawing to be detection.

13. The drawing table area detection method according to claim 12, wherein the step of constructing an ordered set based on the effective inflection point set comprises:

performing a search based on the effective inflection point set to obtain an effective inflection point whose ordinate is 0;
arranging the effective inflection point whose ordinate is 0 in descending order according to the abscissa, and indexing and numbering to form the ordered set.

14. The drawing table area detection method according to claim 12, wherein the step of performing table area detection based on the ordered set to obtain all table areas in the drawing to be detection comprises:

according to the ordered set, determining a head-to-end table area of the upper boundary of the inner border of the drawing and a head-to-end table area of the lower boundary of the inner border of the drawing by adopting a diagonal vertex method;

after the detection of the head-to-end table area of the upper boundary and the head-to-end table area of the lower boundary, teaming the remaining effective inflection points in the ordered set according to the index parity principle;

after the teaming, determining the middle table area of the upper boundary of the inner border of the drawing and the middle table area of the lower boundary of the inner border of the drawing by a diagonal vertex method.

**15.** A drawing table area detection apparatus, comprising:

an acquisition unit for acquiring an original image of the drawing to be detection;

a preprocessing unit for preprocessing the original image of the drawing to be detection to obtain a binary image of the drawing to be detection;

a selecting unit for selecting an initial point in the binary image of the drawing to be detection;

a border detection unit for performing inner border detection on the binary image of the drawing to be detection by a point-by-point path finding method based on the initial point to obtain an inner border of the drawing;

a table area detection unit for performing table area detection based on an inner border of the drawing to obtain all table areas in the drawing to be detection;

a table extraction unit for performing table extraction on all table areas in the drawing to be detection to obtain all tables in the drawing to be detection.

**16.** A storage medium storing a computer program adapted to be loaded by a processor to perform the steps of the drawing table area detection method according to any one of claims 1 to 14.

**17.** An electronic device comprising a memory having a computer program stored therein and a processor, the processor performing the steps of the drawing table area detection method according to any one of claims 1 to 14 by calling the computer program stored in the memory.

S101

acquiring an original image of a drawing to be detection.

S102

preprocessing the original image of the drawing to be detection to obtain a binary image of the drawing to be detection.

S103

selecting an initial point in the binary image of the drawing to be detection.

S104

performing inner border detection on the binary image of the drawing to be detection by a point-by-point path finding method based on the initial point to obtain an inner border of the drawing.

S105

performing table area detection based on the inner border of the drawing to obtain all table areas in the drawing to be detection.

S106

performing table extraction on all table areas in the drawing to be detection to obtain all tables in the drawing to be detection.

FIG.1

FIG.2

FIG.3

C D
E F
noise

A B

table

noise

inflection point

FIG.4

FIG.5

FIG.6

FIG.7

FIG.8

FIG.9

```
┌─────────────────────────────┐
│   An acquisition unit 11    │
└─────────────────────────────┘
              │
              ▼
┌─────────────────────────────┐
│   A preprocessing unit 12   │
└─────────────────────────────┘
              │
              ▼
┌─────────────────────────────┐
│    A selection unit 13      │
└─────────────────────────────┘
              │
              ▼
┌─────────────────────────────┐
│  A border detection unit 14 │
└─────────────────────────────┘
              │
              ▼
┌─────────────────────────────┐
│ A table area detection unit 15 │
└─────────────────────────────┘
              │
              ▼
┌─────────────────────────────┐
│  A table extraction unit 16 │
└─────────────────────────────┘
```

FIG.10

## INTERNATIONAL SEARCH REPORT

| International application No. |
| --- |
| **PCT/CN2023/138955** |

**A. CLASSIFICATION OF SUBJECT MATTER**

G06V30/422(2022.01)i; G06V30/413(2022.01)i; G06V30/414(2022.01)i

According to International Patent Classification (IPC) or to both national classification and IPC

**B. FIELDS SEARCHED**

Minimum documentation searched (classification system followed by classification symbols)

IPC:G06V,G06N

Documentation searched other than minimum documentation to the extent that such documents are included in the fields searched

Electronic data base consulted during the international search (name of data base and, where practicable, search terms used)

CNTXT; ENTXT; CNABS; WPABS; CJFD; DWPI; CNKI; IEEE; 3GPP: 二值化, 图像, 边框, 表格, 图纸, 算子, 拐点, binarizat +, image?, border?, table?, drawing?, operator?, inflect+, point?

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117218675 A (CHINA NUCLEAR POWER ENGINEERING CO., LTD. et al.) 12 December 2023 (2023-12-12) claims 1-17, description, paragraphs 1-188, and figures 1-10 | 1-17 |
| X | CN 112183038 A (GUOXIN SMART SYSTEM (GUANGDONG) CO., LTD.) 05 January 2021 (2021-01-05) description, paragraphs 57-92, and figures 1-8 | 1-3, 15-17 |
| Y | CN 112183038 A (GUOXIN SMART SYSTEM (GUANGDONG) CO., LTD.) 05 January 2021 (2021-01-05) description, paragraphs 57-92, and figures 1-8 | 9, 12-14 |
| Y | CN 111079741 A (TENCENT TECHNOLOGY (SHENZHEN) CO., LTD.) 28 April 2020 (2020-04-28) description, paragraphs 107-114 | 9, 12-14 |
| X | CN 113989820 A (SHENZHEN QIANHAI HUANRONG LIANYI INFORMATION TECHNOLOGY SERVICE CO., LTD.) 28 January 2022 (2022-01-28) description, paragraphs [0033]-[0093] | 1-3, 15-17 |

☑ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **23 May 2024** | **29 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 592 976 A1**

**INTERNATIONAL SEARCH REPORT**

International application No.

**PCT/CN2023/138955**

**C.    DOCUMENTS CONSIDERED TO BE RELEVANT**

| Category* | Citation of document, with indication, where appropriate, of the relevant passages | Relevant to claim No. |
|---|---|---|
| A | CN 108596066 A (WUHAN UNIVERSITY) 28 September 2018 (2018-09-28)<br>entire document | 1-17 |
| A | DE 29924753 U1 (MATSUSHITA ELECTRIC INDUSTRIAL CO., LTD.) 23 June 2005 (2005-06-23)<br>entire document | 1-17 |

Form PCT/ISA/210 (second sheet) (July 2022)

26

**INTERNATIONAL SEARCH REPORT**
Information on patent family members

International application No.

**PCT/CN2023/138955**

| Patent document cited in search report | | | Publication date (day/month/year) | Patent family member(s) | | | Publication date (day/month/year) |
|---|---|---|---|---|---|---|---|
| CN | 117218675 | A | 12 December 2023 | None | | | |
| CN | 112183038 | A | 05 January 2021 | None | | | |
| CN | 111079741 | A | 28 April 2020 | HK | 40022133 | A0 | 13 November 2020 |
| CN | 113989820 | A | 28 January 2022 | None | | | |
| CN | 108596066 | A | 28 September 2018 | CN | 108596066 | B | 26 May 2020 |
| DE | 29924753 | U1 | 23 June 2005 | DE | 19964415 | B4 | 19 April 2007 |
| | | | | DE | 19960555 | B4 | 19 May 2005 |
| | | | | DE | 19964415 | A1 | 16 December 2004 |
| | | | | GB | 2344913 | B | 29 October 2003 |
| | | | | JP | 2000200321 | A | 18 July 2000 |
| | | | | US | 6082619 | A | 04 July 2000 |
| | | | | GB | 2344913 | A | 21 June 2000 |
| | | | | DE | 19960555 | A1 | 21 June 2000 |

Form PCT/ISA/210 (patent family annex) (July 2022)